# EUROPEAN PATENT SPECIFICATION

(11) **EP 1 203 705 B1**
(45) Date of publication and mention of the grant of the patent: **14.09.2005**
(21) Application number: 01109833.2
(22) Date of filing: 23.04.2001
(51) Int. Cl.: B60S 1/66, B60S 1/68, E01C 19/48

(54) **Process for cleaning road machines and apparatus capable of carrying out the process**
Verfahren zur Reinigung von Baufahrzeugen und Vorrichtung zur Durchführung des Verfahrens
Procédé de lavage d'engins de chantier et dispositif pour mettre en oeuvre ce procédé

(30) Priority: 02.11.2000 IT BO000144 U
(43) Date of publication of application: 08.05.2002
(73) Proprietor: Officina Riparazioni Vezzani & C. s.n.c., 41013 Castelfranco Emilia (Modena) (IT)
(72) Inventor: Vezzani, Maurizio, 41100 Modena (IT)
(74) Representative: Rinaldi, Carlo

(56) References cited:
- DE-A- 3 537 619
- DE-U- 29 811 212
- FR-A- 2 041 778
- US-A- 3 477 354
- US-A- 4 262 849
- US-A- 5 222 828

## Description

The present invention relates to an apparatus assembled on a road machine and used for maintaining the road machine clean, for example lorries for transporting bituminous mixes, apparatuses for producing said mixes, road vibratory finishing machines, road roller or as claimed here, tanks for spraying liquid bitumen and the like. These machines use and manipulate bitumen and/or bituminous mixes, which can damage the distribution mechanisms of the mixes; therefore, it is necessary to maintain the wheels clean, the worms for the mixes, the housings and all the parts of the machines which can be in contact with said mixes and their derivatives.

### PRIOR ART

The machines of the above type need a systematic cleaning because of the tendency of the mixes to settle on parts of the machines; these sediments adhere to the ferrous parts of the machines and incrust and damage said parts; their descaling is difficult, particularly when the mixes are dry. Usually, for detaching the bituminous sediments from the ferrous parts, percussion tools (hammers, chisels, etc.) or flames are used, which calcine the sediments for detaching them; it is obvious that these methods of detaching damage the parts of the machines which are subjected to the blows or the superheating.

A known compound is used for detaching the incrustation from the machines; this compound is biodegradable and dissolves the bitumen also if it is emulsified with water.

In order to prevent the mix from being settled, the compound is thrown, sprayed or brushed on the parts at caking risk by means of elements which do not proportion the quantity of compound necessary and sufficient for preventing the begin of the caking or for obtaining the removal of the previously settled mix.

Document DE-U-298 11 212 refers to an apparatus assembled on a road machine. The apparatus carries out a process for cleaning the machine. For this reason the apparatus comprises:
a tank for the compound, the aqueous emulsion or solution of the compound,
a pump having an inlet connected to the tank by means of an inlet duct, and an outlet communicating with discharging ducts through a feed manifold, each discharging ducts having an own opening, each of which, respectively, sends an atomised spray of the compound to the parts at caking risk of the machine.

Many sprays are obtained how many the openings of the discharging ducts are.

The sprays form protective coatings on the parts at caking risk of the machine.

A battery or the electrical system of the road machine elliptically fees the pump; a switch is found in the wire connecting the battery or the electrical system to the pump.

### AIM OF THE INVENTION

In this and other prior art documents nozzles are not provided directed to the front wheels of the front part of the road machine, the driving wheels of the central part of the road machine and to the conveyor chain and the worm of the outlet zone of the road machine.

These dispositions of the nozzles allow the cleaning of the parts at caking risk of the machine.

The apparatus comprises at least a pump which sends a compressed ecological compound, aqueous emulsion or solution of the compound, to ducts the outlets of which are direct to the parts of the machine at caking risk because of the bituminous mixes.

This caking occurs because the mix to be strewed on the featheredge is incoherent and tends to come out from the machine which has no sealed part.

The outlets of the ducts consist of nozzles uniformly atomising the compound or the aqueous emulsion of the compound; each nozzle atomises the compound only for one part of the machine; therefore, it is assembled on a fixed structure of the machine; in addition, a hand-operated nozzle can be used, this nozzle being connected to the pump for cleaning the parts unreachable by the other nozzles.

The pump is feed by the electrical system of the machine or by a battery, and at least a switch is used for feeding the pump.

Advantageously, the apparatus is fitted with a time switch feeding the pump at pre-established time intervals and duration; these time switches are known in the prior art.

Therefore, this apparatus solves the following problems:
a- the assembling of the apparatus on all types of commercial machines; this assembling is eased by the fact that the components of the apparatus are known in the technique structures or devices, as pumps, ducts, nozzles and the like which the technicians assemble in a very easy and immediate way;
b- each nozzle is supported by a structure of the machine, so that the compound sprayed by the nozzle faces the part at caking risk because of the bituminous mixes;
c- the timing of the sprayed compound avoids a driver for the apparatus.

### BRIEF DESCRIPTION OF THE DRAWINGS

Further advantages, details and salient features of the invention will be outlined in the following description of preferred embodiments of the apparatus as in the present invention, with reference to the accompanying drawings:
Fig.1 represents a block diagram of the apparatus;
Fig.2 shows a road machine on which the apparatus is assembled;
Figs 3 to 5 show constructive details of the apparatus;
Fig.6 shows the tank for the compound supported by a first structure of the machine;
Fig.7 represents the pump supported by a second structure of the machine
Fig.8 shows a hand-operated nozzle used for cleaning the parts of the machine unreachable by the other nozzles;

### DESCRIPTION OF A PREFERRED EMBODIMENT OF THE INVENTION

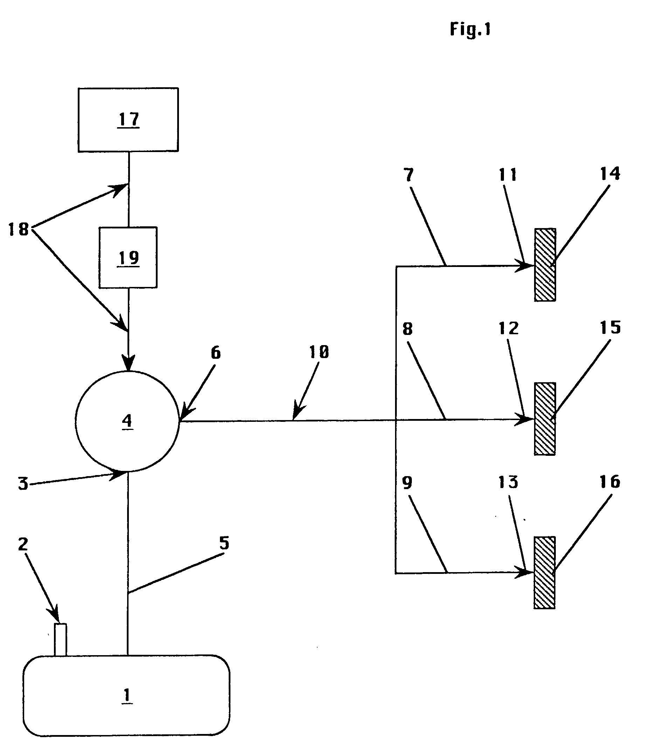

The apparatus schematically shown in Fig.1 comprises a tank 1 containing a commercial compound or an aqueous solution or an emulsion of the compound; the tank 1 is filled through the filler 2 and is connected to the inlet 3 of a pump 4 through a duct 5; the pump 4 is jointed to discharging ducts 7, 8, 9 through a feed manifold 10 connected to the outlet 6 of the pump 4. Each discharging duct 7, 8, 9 presents a own opening 11, 12, 13, which, respectively, sends an atomised spray of the compound to the parts at caking risk 14, 15, 16 of the machine.

The pump 4 is electrically feed by a battery 17 and a switch 19 is provided in the wire 18 between the battery 17 and the pump 4.

Preferably, the switch 19 is a time switch feeding the pump at pre-established time intervals and duration.

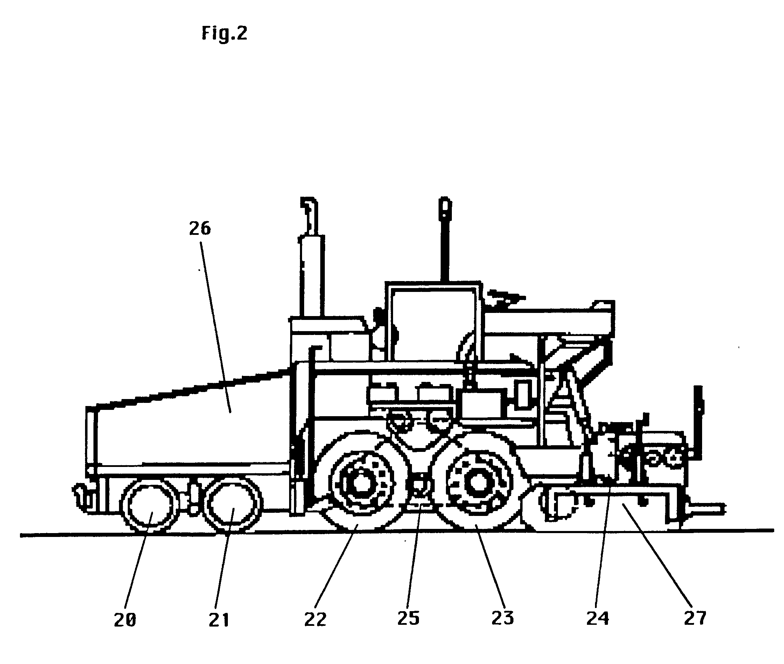

The road machine shown in Fig.2 is fitted with an apparatus according to the invention for maintaining the parts of the machine at caking risk clean.

The apparatus is assembled on the machine and consists of the devices shown in Fig.1; by means of this apparatus, the front solid tires 20, 21, the driving wheels 22, 23, the worm 24 and the conveyor chain 25 for the mix are cleaned.

The bituminous mix is maintained in a box 26 of the machine at a temperature suitable for spreading on the road; once come out from the box 26, the mix covers the whole length of the machine until the mix reaches the outlet zone 27 at the end of the worm 24 for being successively spread on the featheredge.

Along this run, a part of the mix falls on underlying structures of the machine and tends to remain adherent to the conveyor devices for the mix.

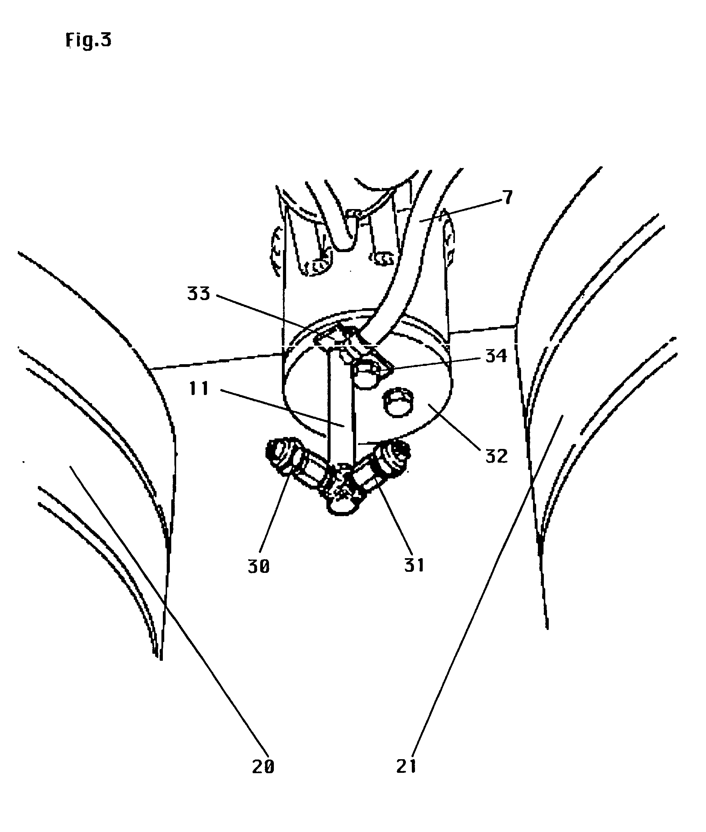

A first part consists of the front wheels 28, 29 located under the box 26 of the machine; therefore, near the wheels 20, 21, two nozzles 30, 31 are located defining the outlet 11 of the discharging duct 7; the nozzles are fastened to a structure 32 of the machine by means of a bracket 33 in order to maintain the direction of the atomised sprays of the nozzles 30, 31 (Fig.3) constant. The nozzles 30, 31 are calibrated for atomising the compound according to the requirements due to the type of machine, the quantity and quality of the mix to be strewed on the ground, the atmospheric conditions, etc.

The assembly and disassembly of the nozzles 30, 31 on and from the machine is a very easy operation since the bracket 33 is fastened to the structure 32 by means of bolts or fastening screws 34 (Fig.3).

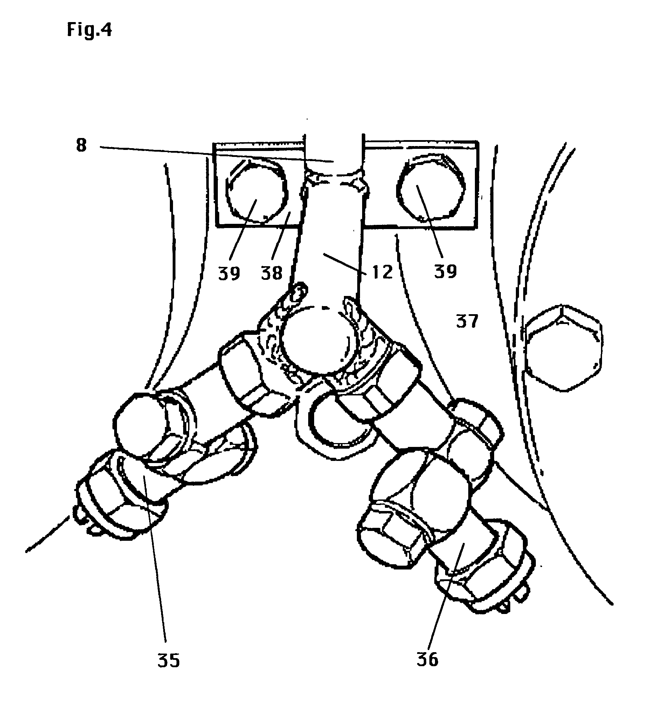

Another zone at caking risk because of the bituminous mixes consists of the driving wheels 22, 23 (Fig.4); therefore, two nozzles 35, 36 are provided fastened to a structure 37 of the machine by means of a bracket 38 in order to maintain the direction of the atomised sprays of the nozzles 35, 36 constant.

Also in this case, the assembly and disassembly of the nozzles 35, 36 on and from the machine is a very easy operation since the bracket 38 is fastened to the structure 37 by means of bolts or fastening screws 39.

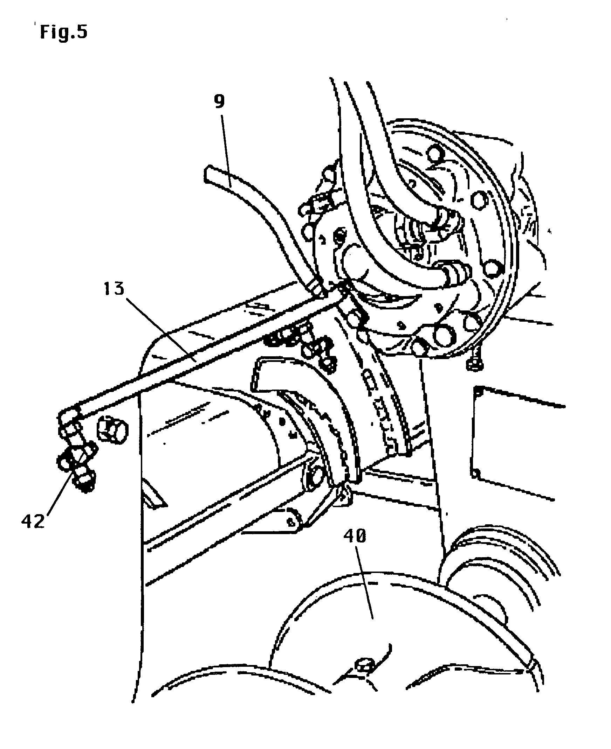

The fouling of the worm 40 and the conveyor chain 41 is particularly dangerous since these two devices are mechanically active; therefore, two nozzles 42, 43 (Fig.5) are provided sending their atomised sprays, respectively, to the worm 40 and the chain 41. The assembly and disassembly of these nozzles is wholly similar to those of the above mentioned nozzles.

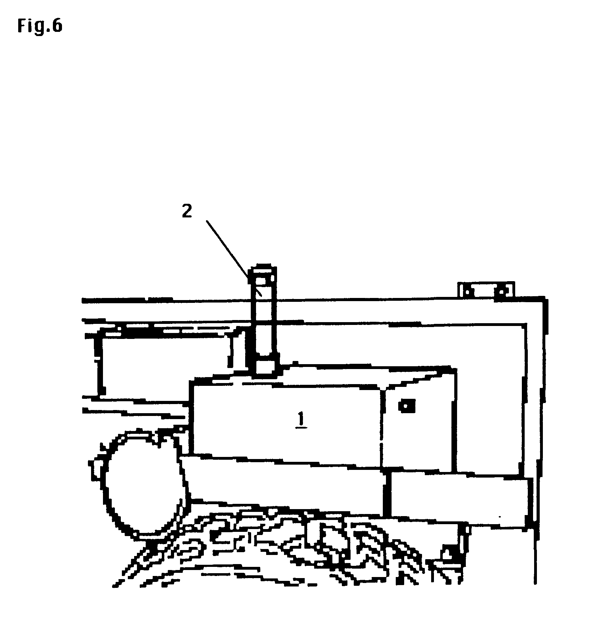

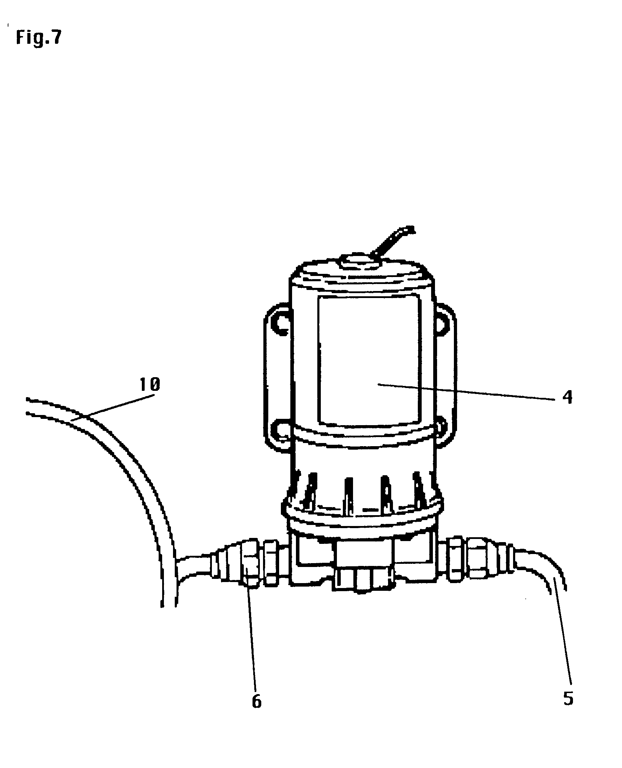

The tank 1 fitted with the filler 2 is supported by a suitable part of the machine (Fig.6), so that the tank 1 is sufficiently near the pump 4 (Fig.7) and the above mentioned nozzles.

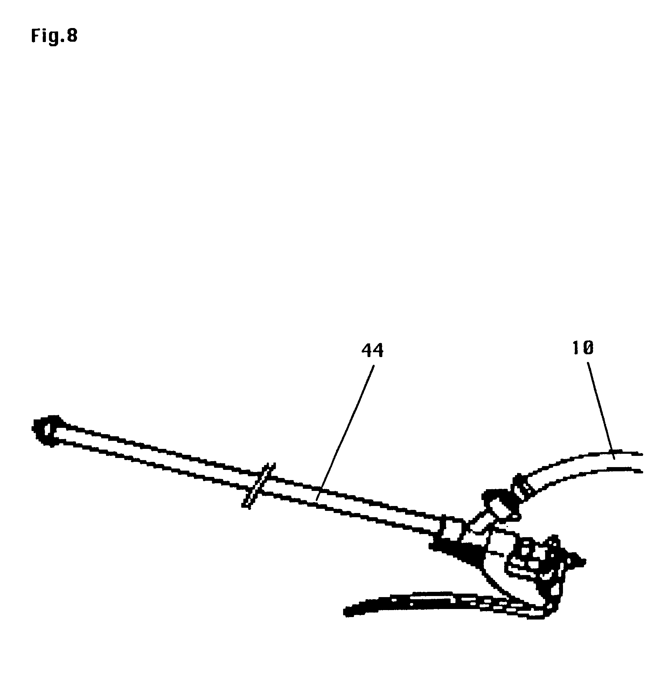

The apparatus is also fitted with a hand-operated nozzle 44 connected to the pump 4, the nozzle 44 being used for cleaning the parts unreachable by the other nozzles (Fig.8).

Also a lorry for transporting the bituminous mix is capable of supporting an apparatus according to the present invention. Obviously, also in this case, the apparatus conceits of the above mentioned details with a number of nozzles suitable for the type of vehicle.

## Claims

1. An apparatus being assembled on a road machine using and manipulating bitumen and/or bituminous mixes, said apparatus being capable of carrying out a cleaning process for the road machine, the apparatus comprising:
a tank (1) containing an ecological compound dissolving bitumen, or an aqueous emulsion or solution of said compound, the emulsion and the solution are capable of dissolving the bitumen and the bituminous compound;
a pump (4) having an inlet connected to the tank (1) through a duct (5) and an outlet (6) joined to discharging ducts (7, 8, 9) through a feed manifold (10),
the feed manifold (10) being linked to the outlet (6) for sending the compressed liquid to the discharging ducts (7, 8, 9),
each discharging duct (7, 8, 9) presenting an own opening (11, 12, 13) each of which, respectively, sends an atomised spray of the compound to the parts (14, 15, 16) at caking risk of the machine on which the spray forms protective coatings,
the openings (11,12,13) consisting of nozzles (30,31,35, 36,42,43),
the nozzles (30,31,35,36,42,43) delivering atomised sprays of the compound, of the aqueous emulsion or of the solution of the compound,
a quantity necessary and sufficient of the atomised sprays adhering to the surfaces at caking risk of the road machine for preventing begin of the caking or for obtaining the removal of the previously settled mix;
the nozzles (30,31,35,36, 42,43) being fastened to structures (32) of the machine by means of brackets (33) in order to maintain the direction of the atomised sprays of the nozzles (30,31,35,36,42,43) constant,
the brackets (33) being fastened to a structure (32) of the machine by means of bolts or fastening screws (34) the apparatus and the road machine being **characterised by** the fact that
the machine comprising the following parts:
a front part comprising the front wheels (28, 29) located under a box (26) of the machine, where the bituminous mix is maintained at a suitable temperature;
a central part with driving wheels (22, 23) supporting a conveyor chain (41) where the bituminous mix is conveyed; an outlet zone (6) for the bituminous mix comprising the end of the conveyor chain (41) and a worm wheel (40) which spreads successively the mix on the road;
and that nozzles (30,31,35,36,42,43) are directed to the front wheels (28, 29) of the front part, to the driving wheels (22, 23) of the central part and to the conveyor chain (41) and the worm (40) of the outlet zone.

2. An apparatus assembled on a road machine as in claim 1, wherein the pump (4) is electrically feed by a battery (17) or the electrical system of the road machine.

3. An apparatus assembled on a road machine as in claim 2, wherein a switch (19) is provided in the wire (18) between the battery (17) and the pump (4), or the electrical system and the pump (4).

4. An apparatus assembled on a road machine as in claim 3, wherein the switch (19) is a time switch (19) feeding the pump (4) at pre-established time intervals and duration.

5. An apparatus assembled on a road machine as in claim 1, wherein an additional hand-operated nozzle (44) is connected to the pump (4), the hand-operated nozzle (44) being used for cleaning the parts of the road machine unreachable by the other nozzles (30, 31,35,36,42,43).

## Patentansprüche

1. Eine Vorrichtung, die auf einem Baufahrzeug zusammengebaut ist, und die Bitumen und/oder bituminöse Mischungen verwendet und betätigt, wobei die Vorrichtung geeignet ist, ein Reinigungsverfahren von den Strassenmaschinen durchzuführen, und
wobei die Vorrichtung enthält:
einen Behälter (1), der ein das Bitumen auflösendes ökologisches Mittel, oder eine wäßrige Emulsion oder eine Lösung des Mittels, enthält, wobei die Emulsion und die Lösung fähig sind, das Bitumen und die bituminöse Mischung zu lösen;
eine Pumpe (4),deren Eingang mit dem Behälter (1) über einer Leitung (5) verbunden ist,und deren Ausgang (6) mit Abflußleitungen (7, 8, 9) über einem Verteilerrohr (10) vereinigt ist,
wobei das Verteilerrohr (10) mit dem Ausgang (6) verbunden ist, um die verdichtete Flüssigkeit zu den Abflußleitungen zu senden (7, 8, 9), und
wobei jede der Abflußleitungen (7, 8, 9) eine eigene Öffnung (11, 12, 13) aufweist, je geeignet, ein atomisiertes Sprühen des Mittels an die Teilen (14, 15, 16) auf Ablagerungsgefahr des Baufahrzeuges zu liefern, auf welchen Teilen das Sprühen schützende Schichten bildet, und
die Öffnungen (11,12,13) bestehen aus Düsen (30, 31, 35, 36, 42, 43), und
die Düsen (30,31,35,36,42,43) liefern atomisierte Sprühen des Mittels, der wäßrigen Emulsion, oder der Lösung des Mittels,
eine notwendige und genügende Menge der atomisierten Sprühen haftet auf den Oberflächen auf Ablagerungsgefahr des Baufahrzeuges zum Verhindern des Beginns der Ablagerung, oder zum Erreichen des Abbaues der vorher getrockneten Mischung;
wobei die Düsen (30, 31, 35, 36, 42, 43) an Strukturen (32) des Baufahrzeuges durch Bügel (33) befestigt sind,damit die Richtung der atomisierten Sprühen der Düsen (30, 31,35,36,42,43) stetig beibehalten ist,
wobei die Bügel (33) an einer Struktur (32) des Baufahrzeuges durch Bolzen oder Befestigungsschrauben (34) befestigt sind,
wobei die Vorrichtung und der Baufahrzeug **dadurch gekennzeichnet sind, daß** der Baufahrzeug folgende Teile enthält:
ein Vorderteil,welches die Vorderräder (28, 29) aufweist, die sich unter einem Kasten (26) des Baufahrzeuges befinden, wobei die bituminöse Mischung bei einer angemessenen Temperatur im Kasten (26) beibehalten ist;
ein mit Antriebsrädern (22, 23) ausgestattetes Mittelteil, das eine Förderkette (41) stützt, wobei die bituminöse Mischung in die Förderkette (41) geliefert wird;
eine Ausgangszone (6) für die bituminöse Mischung, die das Ende der Förderkette (41) zusammen mit einer Schnecke (40) enthält, welche die Mischung auf die Straße nachher besprüht;
und
daß die Düsen (30,31,35,36,42,43) auf die Vorderräder (28,29) des Vorderteils, die Antriebsräder (22,23) des Mittelteils, die Förderkette (41), und die Schnecke (40) der Ausgangszone (6) gerichtet sind.

2. Eine Vorrichtung, die auf einem Baufahrzeug zusammengebaut ist, nach Anspruch 1 **dadurch gekennzeichnet, daß** die Pumpe (4) durch eine Batterie (17) oder das elektrische System des Baufahrzeuges gespeist wird.

3. Eine Vorrichtung, die auf einem Baufahrzeug zusammengebaut ist, nach Anspruch 2 **dadurch gekennzeichnet, daß** ein Schalter (19) in der Leitung (18) zwischen der Batterie (17) und der Pumpe (4), oder zwischen dem elektrischen System und der Pumpe (4) vorgesehen ist.

4. Eine Vorrichtung, die auf einem Baufahrzeug zusammengebaut ist, nach Anspruch 3 **dadurch gekennzeichnet, daß** der Schalter (19) ein Zeitschalter (19) ist, der die Pumpe (4) in vorher festgesetzten Zeitabständen und Dauer speist.

5. Eine Vorrichtung, die auf einem Baufahrzeug zusammengebaut ist, nach Anspruch 1 **dadurch gekennzeichnet, daß** eine zusätzliche mit der Hand betätigte Düse (44) mit der Pumpe (4) verbunden ist, wobei die mit der Hand betätigte Düse (44) ) zum Reinigen der Teile des Baufahrzeuges verwendetwird,die durch die anderen Düsen (30, 31, 35, 36,42,43) unerreichbar sind.

## Revendications

1. Un dispositif monté sur les engins de chantier qui utilise et manipule du bitume et/ou des agglomérations bitumineux, le dispositif est capable de mettre en oeuvre un procédé de lavage d'engins de chantier, le dispositif comprend:
un réservoir (1) contenant une préparation écologique qui dissout le bitume ou une émulsion ou une solution aqueuse de la préparation, l'émulsion et la solution sont capables de dissoudre le bitume et la préparation bitumineuse;
une pompe (4) avec une entrée reliée au réservoir (1) par une conduite (5) et une sortie (6) en communication avec des conduites de déchargement (7, 8, 9) par un collecteur de sortie (10),
le collecteur de sortie (10) est relié à la sortie (6) pour envoyer le liquide en pression aux conduites de déchargement (7,8,9),
chaque conduite de déchargement (7,8,9) présente une ouverture (11, 12, 13), chaque ouverture, respectivement, envoie une éclaboussure atomisée de la préparation aux parties (14, 15, 16) à risque de sédimentation de l'engin sur lesquelles les éclaboussures atomisées forment des couches de protection,
les ouvertures (11,12,13) sont constituées par des buses (30,31,35,36,42,43),
les buses (30, 31, 35, 36, 42, 43) délivrent des éclaboussures atomisées de la préparation,de l'émulsionou de la solution aqueuse de la préparation,
une quantité nécessaire et suffisante des éclaboussures atomisées adhère aux surfaces à risque de sédimentation de l'engin de chantier pour empêcher le début de la sédimentation ou pour obtenir l'ablation de l'agglomération précédemment déposée;
les buses (30,31,35,36,42,43) sont fixées à des structures (32) de l'engin par des brides (33) au fin de maintenir la direction des éclaboussures atomisées par les buses (30,31,35,36,42,43) constant,
les brides (33) sont fixées à des structures (32) de l'engin par des boulons ou des vis de fixation (34);
le dispositif et l'engin de chantier sont **caractérisés en ce que** l'engin comprend les parts suivantes:
une partie frontale comprenant les roues antérieures (28,29) disposées sous un vain (26) de l'engin où l'agglomération bitumineuse est maintenue à une température appropriée;
une partie centrale avec les roues motrices (22, 23) qui soutienne une chaîne d'avancement(41) où l'agglomérationest envoyée;
une zone de sortie (6) pour l'agglomération comprenant l'extrémité de la chaîne d'avancement(41) et une vis sans fin (40) qui asperge l'agglomération sur la route;
et **en ce que** les buses (30,31,35,36,42,43) sont dirigées vers les roues antérieures (28,29) de la partie frontale et vers les roues motrices (22, 23) de la partie centrale et vers la chaîne d'avancement(41) et la vis sans fin (40) de la zone de sortie.

2. Un dispositif monté sur un engin de chantier selon la revendication 1, **caractérisé en ce que** la pompe est alimentée électriquement par une batterie (17) ou par le système électrique de l'engin de chantier.

3. Un dispositif monté sur un engin de chantier selon la revendication 2, **caractérisé en ce que** un interrupteur (19) se trouve dans le conducteur (18) entre la batterie (17) et la pompe (4),ou entre le système électrique et la pompe (4).

4. Un dispositif monté sur un engin de chantier selon la revendication 3, **caractérisé en ce que** l'interrupteur (19) est un temporisateur (19) qui alimente la pompe (4) à intervalles et durées préfixés.

5. Un dispositif monté sur un engin de chantier selon la revendication 1, **caractérisé en ce que** une buse supplémentaire (44) actionnée à la main est reliée à la pompe (4), la buse (44) actionnée à la main est utilisée pour le lavage des parties de l'engin de chantier qui ne peuvent pas être rejointes par les autres buses (30,31,35,36,42,43).
